# EUROPEAN PATENT SPECIFICATION

(11) **EP 2 801 393 B1**
(45) Date of publication and mention of the grant of the patent: **06.01.2016**
(21) Application number: 13166753.7
(22) Date of filing: 07.05.2013
(51) Int. Cl.: A62C 27/00, B66C 23/78, B66F 17/00

(54) **Utility vehicle with assistance system for positioning lateral ground supports**
Nutzfahrzeug mit Assistenzsystem zur Positionierung seitlicher Bodenabstützungen
Véhicule utilitaire avec système d'assistance pour positionnement des supports de masse latérale

(43) Date of publication of application: 12.11.2014
(73) Proprietor: IVECO MAGIRUS AG, 89079 Ulm (DE)
(72) Inventor: Ewert, Juergen, 89075 ULM (DE)
(74) Representative: Franzolin, Luigi

(56) References cited:
- EP-A2- 1 916 153
- JP-A- 2008 074 594
- JP-A- 2009 073 248
- US-A1- 2005 073 397

## Description

The present invention relates to a utility vehicle, in particular to a firefighting vehicle, comprising an aerial apparatus like a turnable ladder and/or an aerial rescue platform according to the preamble of claim 1.

For safe operation, vehicles of the above kind usually comprise safety means to provide a solid stand of the vehicle on the ground when the aerial apparatus is extracted and moved. It is of particular importance to avoid any tilting of the vehicle when the end of the aerial apparatus is moved into a lateral position projecting from the vehicle body. For the sake of simplicity reference is made only to turnable and extractable ladders in the following, like they are very common on rescue vehicles, while this should not be understood in a limiting sense, i.e. the present invention shall also be applicable to vehicles equipped with aerial rescue platforms that can be lifted and turned. Moreover, it is not restricted to rescue vehicles but can also be applied to any other utility vehicles equipped with cranes or the like that may cantilever to one side of the vehicle.

As such a safety means, lateral ground supports have become very common that are lifted from the ground in a retracted non-use position and can be extracted into an operating position in which the ends of the supports rest on the ground.

For example, these lateral ground supports can be represented by outriggers that can be retracted or extended in a mainly horizontal direction so that their ends are located in a distance from the vehicle body in the operating position. The ends of the outriggers can be equipped with jacks to strut against the ground. Another possibility is to tilt the outrigger slightly downwards so that its end touches the ground. If such a touchdown of outriggers is provided at both sides of the vehicle, the support area for a vehicle is widened, giving the vehicle a secure stand. A third possibility is to locate the support more or less directly a the side of the vehicle body, e.g. in form of a jack as described above, so that the support is just lifted during non-use and it is lowered in its operating position. In the sense of the following description, the terms "retracted" or "extracted" with respect to the ground supports shall not limit its operation to any special direction, i.e. horizontal or vertical, but shall just describe that the support is movable between two different working positions at the lateral side of the vehicle body. It is further noted that the term "lateral" in the meaning of the present application shall define not only the left and right area adjacent to the vehicle body but also front and rear areas in front of the driver's cabin and behind the vehicle.

It is often difficult in rescue situation to find the optimum position for a rescue vehicle, especially in narrow alleys between houses, parking cars and other obstacles. Valuable time is often lost in maneuvering the vehicle accordingly. A major problem in this situation is to find a position in which the ground supports can move into their operating positions without being obstructed by objects. Moreover, care must be taken not to position the ends of the supports on drain pits, manhole covers, soft ground surfaces like lawn areas and so on, because they do not provide a solid basis for the support. It is very hard for the operator to position the vehicle such that the ground supports will be properly positioned, and the operating position must be estimated when the vehicle is stopped, to avoid further maneuvering operations. This acquires high operation skills in positioning the vehicle. These problems are even aggravated by the fact that usually the sight conditions are very bad, for example, in a dark environment, and the operator is not able to overview the estimated operating positions of the supports, and usually he needs the help of another person who monitors the maneuvering.

An attempt to solve this problem was made in JP2008074594 where the estimated positions of the supports are superimposed on the acquired images of the vehicle surroundings.

It is the object of the present invention to provide a utility vehicle of the above kind, in particular a rescue vehicle like a firefighting vehicle, which makes the positioning of the supports in their operating positions easier, even in a narrow space, under bad visual conditions and without the help of a second person, to safe time for positioning the vehicle.

The utility vehicle according to the present invention is equipped with an assistance system for positioning the lateral ground supports that facilitates the positioning operation and makes the estimation of the operating position of the supports much easier, even for unexperienced operators. For this purpose the present assistance system comprises optical means for projecting visual markings on the ground areas on which the ends of the supports rest in their operating position. Each visual marking represents the expected operating position of one support.

The visual marking created with the help of this assistance system greatly facilitates the estimation of the expected operating position of the supports even when they are still retracted in their non-operation positions. If at least one of these visual markings is positioned on an area that is not suitable for a ground support to rest on, because there is an obstructing object or any other kind of non-suitable ground surface, he can correct the position of the vehicle accordingly to find proper expected operating positions for the supports that are indicated by the markings. Thus it is possible to recognize the danger of a collision with an object, or an area of the ground that is suitable for positioning the supports, before the supports are actually positioned. It might even be possible to use the present assistance system already during a maneuvering movement of the vehicle itself, such that the visual markings are already projected laterally on the ground to assist the driver in the maneuvering operation. The visual markings can be projected such that they are even visible under poor side conditions with poor visibility, for example, at night or in a smoky area or bad weather.

According to a preferred embodiment of the present invention, the optical means comprise light sources provided to project the visual markings to the ground.

Preferably the light sources are laser light sources. In this case the visual markings are projected by laser beams emitted by the light sources such that the markings are bright and sharp enough to be easily perceived by the driver or an auxiliary person.

More preferably, the optical means comprise means for directing, focusing and/or for masking the light emitted by the light sources. These optical means may be, for example, lenses, mirrors, masks or any other means for generating the visual markings. For example, the light sources are bright spotlights that are directed and focused to the ground but are masked by a respective masking element to generate a sharp beam for producing the visual marking. Such techniques are similar to mask spot point lights as they are used in x-ray devices in medical applications.

According to another preferred embodiment, the optical means are provided to project visual markings in a T-shape, with a longitudinal line extending laterally from the vehicle in the extraction direction of the respective support, and a cross line extending perpendicular to both sides of the outer end of the longitudinal line. In this case the longitudinal line may represent an indicator for the maximum extraction length of the respective support, while the cross line represents the extension of the support to both sides with respect to its extension direction, with the option to indicate a security distance around the maximum extraction length. Both lines may be generated by sharp beams emitted by the light sources of the optical means.

More preferably, the optical means are provided to project colored visual markings.

According to another preferred embodiment of the present invention, the present assistance system comprises control means for controlling the optical means, said control means being provided to operate all present optical means synchronously. These control means may comprise a manually operable push button or the like, that enables an operator to activate the projection of all the visual markings at the same time.

More preferably, the control means are provided to deactivate the optical means after the predetermined time interval has lapsed after their activation.

More preferably, the control means are provided to activate the optical means only if the driving speed of the vehicle is below a predetermined speed limit. This may represent a control function to operate the assistance system only in case the speed of the utility vehicle is slow enough to provide a safe positioning of the supports.

According to another preferred embodiment of the present invention, the utility vehicle comprises surveillance cameras at the sides of the vehicle, each camera being allocated to one support to monitor the ground area on which the end of this support rests in its operating position and to take a real time image of the respective visual marking, and a visual display presenting the images of all cameras at the same time. By means of these surveillance cameras, an operator can monitor all ground areas with the visual markings of the assistance system at the same time so that he is able to judge whether or not the ground supports can be properly positioned, without the help of any auxiliary person. For example, the visual display for presenting the images of the cameras may be positioned in the driver's cabin of the vehicle where an operator stand comprising control means for controlling the assistance system and the positioning drive for the supports is located.

These and other aspects of the present invention will be apparent from and elucidated with reference to a preferred embodiment described hereinafter.
- Fig. 1: is a perspective view of a fire fighting vehicle as one embodiment of a utility vehicle according to the present invention;
- Fig. 2: is a schematic view of the fire fighting vehicle according to the embodiment of Fig. 1 as an areal view, showing the visual markings.

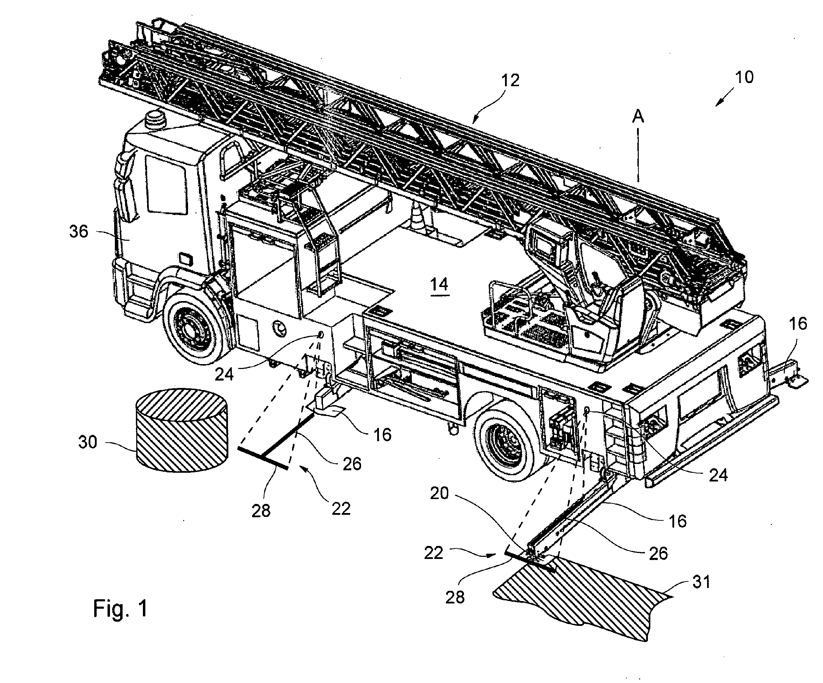

The firefighting vehicle 10 in Fig. 1 is one example of a utility vehicle according to the present invention. The firefighting vehicle is equipped with a turnable ladder 12 on its top that is turnable around a vertical axis A and comprises a number of ladder segments that are slidably supported on each other so that the ladder 12 is extractable. If this extraction of the turnable ladder 12 is performed in a position where the ladder 12 is swiveled in lateral direction, i.e. in a right angle from the non-use position shown in Fig. 1, the weight of the ladder acts to tilt the vehicle body 14 around its horizontal longitudinal axis. To support the vehicle 10 safely on the ground, it is therefore necessary to provide an additional support means at the sides of the vehicle.

Ground supports 16 are provided at the sides of the vehicle body 14. These supports 16 comprise bars 18 that extend in mainly horizontal direction from the lower part of the vehicle body 14 in the lateral direction, i.e. rectangular to the driving direction. These bars 18 are extractable so that the supports 16 are movable between retracted positions, in which the supports 16 are positioned under the vehicle body 14 so that they do not protrude in a lateral direction from the vehicle, and extracted operation positions, in which the ends 20 of the supports 16 rest on the ground in a distance from the respective sides from the vehicle 10. In Fig. 1, one ground support 16 at the front left side of the vehicle is shown in an almost completely retracted position, in which its bar 18 is hidden under the vehicle body 14, while the rear left support 16 is shown in its extracted operation position, in which its end 20 rests on the ground. The contact to the ground is achieved by tilting the support 16 slightly downward, as in the present embodiment of the vehicle 10, or by any other suitable mechanism. A very common construction of supports 16 comprises jacks at their ends that have lower contact surfaces that can be pressed onto the ground in the operating position. However, the present invention is not limited to any construction but can refer to any suitable supporting mechanism of the supports 16. When positioning the firefighting vehicle 10 in a rescue situation, maneuvering of the vehicle 10 can be difficult to find a position in which the supports 16 will have suitable operating positions. This is because the operating positions must be estimated by the driver of the vehicle 10, and this may be difficult at narrow places with obstacles in the lateral ground area, like parking cars, plant pots, etc. Another difficulty lies in finding a piece of ground to support the ends 20 of the supports 16 that is solid enough to resist against the forces acting onto the outriggers 16. According to the present invention, these problems are solved by an assistance system, which facilitates the estimation of the operating position before extracting the supports 16. This assistance system comprises optical means for projecting visual markings 22 on the ground areas on which the ends 20 of the support 16 rest in their operating position. In the present embodiment, these optical means comprise laser light sources 24 positioned laterally at the vehicle body 14 above the supports 16 for projecting the visual markings 22 downwardly to the ground in the environmental area around the vehicle 10. The optical means for projection may comprise further suitable optical devices, like lenses, masks or the like for directing, focusing and/or for masking the light emitted by the laser light sources. It is further to be noted that the present invention is not restricted to the use of laser light sources. Other kinds of suitable light sources may rather be used for projecting sharp and bright markings on the ground, that can be perceived easily by the driver or any auxiliary person for positioning the ground supports 16.

The visual markings 22 generally have a T-shape, with a longitudinal line 26 extending laterally from the vehicle exactly in the extraction direction of the respective support 16. It can be taken from Fig. 1 that in case of the front left ground support 16 that is still in its almost retracted position, the line 26 represents a prolongation of the still retracted beam 18 to its final operating position. That is, when the ground support 16 is extracted, the bar 18 is shifted laterally from the vehicle body 14 to follow the line 26 to its outer end. Moreover, the visual marking 22 comprises a cross line 28 that extends perpendicular to both sides of the outer end of the longitudinal line 26. This cross line 28 extends in the longitudinal driving direction of the vehicle 10, perpendicular to the shifting direction of the bar 18 of the support 16. It marks the end of the longitudinal line 26 visually. Moreover, the ends of the cross line 28 may mark a security distance to be maintained by any objects 30 from the end 20 of the respective ground supports 16. In the example of the front left support 16 in Fig. 1, a plant pot 30 is located near the front end of the cross line 28 but still keeps enough distance to move the front left ground support 16 into its operating position. This can already been estimated in the retracted position of the front left ground supports 16, because of the projection of the front left visual marking 22 on the respective ground area. That is, the assistance system is operated for projecting the visual markings 22 before the ground supports 16 are moved in their operating positions. This can already be the case when the vehicle 10 is maneuvered into its general operating position, so that the driver of the vehicle 10 can estimate during the maneuvering process whether or not the position of the vehicle 10 is suitable for positioning the respective ground supports 16. If this position is not suitable, any part of the visual marking 22 would hit the respective object, like the plant pot 30, and the respective visual marking 22 will be visible on the object 30 itself. Otherwise the visual marking 22 would represent a flat pattern in the shape of the letter "T" on the ground, which can be taken as an indicator for a flat ground area to position the end 20 of the ground support 16 thereon.

Not only objects 30 but other unsuitable areas, like soft ground or a man hole cover, in the ground area for positioning the support 16 can easily be recognized by projecting the visual markings 22. In the example of the rear left ground support 16, which is already shown in Fig. 1 in its extracted position, a soft lawn area 31 is hit by the rear portion of the cross line 28. This can be perceived by the driver or any other operator of the ground supports 16 or by an auxiliary person, giving the operator a respective signal that the vehicle 10 must be positioned otherwise to find a proper final operating position for the ground supports 16. The optical means of the assistance system may be provided to project the visual markings 22 in color to enhance the visual perceptibility of the markings 22. In any case it will be helpful to project the markings 22 in such a way that they represent a sharp and defined pattern on the ground.

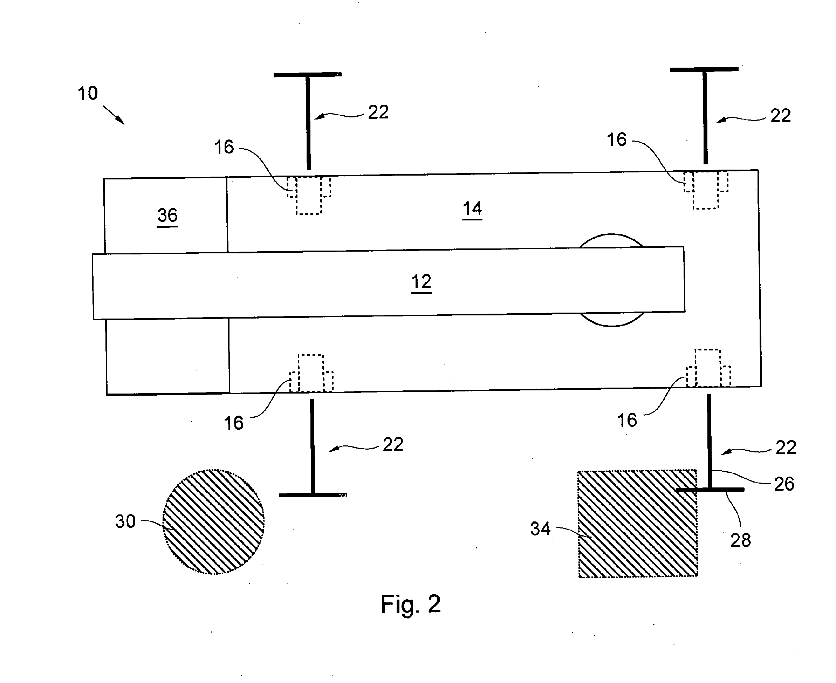

Fig. 2 shows the vehicle 10 schematically from above, also indicating completely retracted positions of the ground supports 16 and the T-shaped visual markings 22, each marking 22 representing an expected operating position of one support 16. It is to be noted that the visual marking 22 does not necessarily have to represent the shape of the support 16 in its extracted state. However, as described above, it may extend beyond the physical extensions of the support 16 in its longitudinal direction and/or in its width direction, perpendicular to its extraction direction, such that the marking 22 also indicates a safety area around the support 16 in its operating position to be clear from any object. In the lower part of Fig. 2, representing the left lateral ground area next to the vehicle body 14, an object 30 like the plant pot in Fig. 1 is shown next to the visual marking 22 for the front left ground support 16. It can easily be estimated that the marking 22 does not hit the object 30, and the support 16 can be extracted in its operating position. However, in case of the rear left support 16, the front end of the cross line 28 of the marking 22 hits a ground area 34, like a soft lawn area, that is not suited or positioning the respective support 16. In this case the driver or the operator of the supports 16 can see that this rear left support 16 will not be placed properly in its operating position, even before this support 16 is moved into its extracted position.

In the driver's cabin 36, which is located on the left side in Fig. 2, control means can be provided for controlling the optical means to project the visual markings 22. These control means may comprise a manually operable push button, a soft button or the like. The control means can be made very simple to operate all present optical means of all four supports 16 at the same time, i. e. synchronously. According to one possible embodiment, the optical means are deactivated after a predetermined time interval has lapsed after their activation, to turn the visual markings 22 off automatically. Moreover, the control means can be provided to activate the optical means only if the driving speed of the vehicle is below a predetermined speed limit, to ensure that maneuvering and finding a proper operating position for the supports 16 is performed only when the driving speed is low enough.

As a further option, surveillance cameras can be arranged at the sides of the vehicle near the light sources of the assistance system. Each camera may be allocated to one support 16 to monitor the ground area on which the ends 20 of this supports 16 rests in its operating position. A real time image can be taken of the respective visual marking 22, and a visual display may be provided, for example, in the driver's cabin 36 presenting all images of all cameras at the same time. In this arrangement of the assistance system according to the present invention, an operator within the driver's cabin 36, for example, the driver himself can monitor all visual markings 22 at the same time.

## Claims

1. Utility vehicle, in particular a firefighting vehicle (10), comprising an aerial apparatus like a turnable ladder (12) and/or an aerial rescue platform and lateral ground supports (16) that are movable between retracted positions and extracted operating positions in which the ends of the supports (16) rest on the ground, **characterized by** an assistance system for positioning the lateral ground supports (16), comprising optical means for projecting visual markings (22) on the ground areas on which the ends (20) of the supports (16) rest in their operating position, each visual marking (22) representing an expected operating position of one support.

2. Utility vehicle according to claim 1, **characterized in that** the optical means are light sources (24) provided to project the the visual markings (22) to the ground.

3. Utility vehicle according to claim 2, **characterized in that** the light sources (24) are laser light sources.

4. Utility vehicle according to claim 2 or 3, **characterized in that** the optical means comprise means for directing, focusing and/or for masking the light emitted by the light sources (24).

5. Utility vehicle according to one of the preceding claims, **characterized in that** the optical means are provided to project visual markings (22) in a T-shape, with a logitudinal beam (26) extending laterally from the vehicle (10) in the extraction direction of the respective support (16), and a cross beam (28) extending perpendicular to both sides of the outer end of the logitudinal beam (26).

6. Utility vehicle according to one of the preceding claims, **characterized in that** the optical means are provided to project coloured visual markings (22).

7. Utility vehicle according to one of the preceding claims, **characterized by** control means for controlling the optical means, said control means being provided to operate all present optical means synchronously.

8. Utility vehicle according to claim 7, **characterized in that** the control means are provided to deactivate the optical means after a predetermined time interval has lapsed after their activation.

9. Utility vehicle according to claim 7 or 8, **characterized in that** the control means are provided to activate the optical means only if the driving speed of the vehicle is below a predetermined speed limit.

10. Utility vehicle according to one of the preceding claims, **characterized by** surveillance cameras at the sides of the vehicle (10), each camera being allocated to one support (16) to monitor the ground area on which the end (20) of this support (16) rests in its operating position and to take a real-time image of the respective visual marking (22), and a visual display presenting the images of all cameras at the same time.

## Patentansprüche

1. Nutzfahrzeug, insbesondere Feuerwehrfahrzeug (10), umfassend eine Hubvorrichtung wie etwa eine Drehleiter (12) und/oder eine Hubrettungsplattform, und seitliche Bodenstützen (16), die zwischen eingezogenen Stellungen und ausgefahrenen Betriebspositionen beweglich sind, in denen die Enden der Stützen (16) auf dem Boden abgestützt sind, **gekennzeichnet durch** ein Assistenzsystem zur Positionierung der seitlichen Bodenstützen (16), umfassend optische Mittel zur Projektion visueller Markierungen (22) auf Bodenflächenbereichen, auf denen die Enden (20) der Stützen (16) in ihren Betriebspositionen ruhen, wobei jede visuelle Markierung (22) eine voraussichtliche Betriebsposition einer Stütze repräsentiert.

2. Nutzfahrzeug gemäß Anspruch 1, **dadurch gekennzeichnet, dass** die optischen Mittel Lichtquellen (24) zur Projektion der visuellen Markierungen (22) auf den Boden sind.

3. Nutzfahrzeug gemäß Anspruch 2, **dadurch gekennzeichnet, dass** die Lichtquellen (24) Laserlichtquellen sind.

4. Nutzfahrzeug gemäß Anspruch 2 oder 3, **dadurch gekennzeichnet, dass** die optischen Mittel solche Mittel zur Ausrichtung, Fokussierung und/oder Maskierung des von den Lichtquellen 24 emittierten Lichts umfassen.

5. Nutzfahrzeug gemäß einem der vorhergehenden Ansprüche, **dadurch gekennzeichnet, dass** die optischen Mittel dazu vorgesehen sind, T-förmige visuelle Markierungen (22) zu projizieren, mit einem Längsbalken (26), der sich seitlich von dem Fahrzeug (10) in der Ausfahrrichtung der jeweiligen Stütze (16) erstreckt, und einem Querbalken (28), der sich senkrecht zu beiden Seiten des äußeren Endes des Längsbalkens (20) erstreckt.

6. Nutzfahrzeug gemäß einem der vorhergehenden Ansprüche, **dadurch gekennzeichnet, dass** die optischen Mittel zur Projektion farbiger visueller Markierungen (22) vorgesehen sind.

7. Nutzfahrzeug gemäß einem der vorhergehenden Ansprüche, **gekennzeichnet durch** Steuermittel zur Steuerung der optischen Mittel, welche Steuermittel dazu ausgebildet sind, alle vorhandenen optischen Mittel gleichzeitig zu betreiben.

8. Nutzfahrzeug gemäß Anspruch 7, **dadurch gekennzeichnet, dass** die Steuermittel dazu ausgebildet sind, die optischen Mittel zu deaktivieren, nachdem ein vorbestimmtes Zeitintervall seit ihrer Aktivierung verstrichen ist.

9. Nutzfahrzeug gemäß Anspruch 7 oder 8, **dadurch gekennzeichnet, dass** die Steuermittel dazu ausgebildet sind, die optischen Mittel lediglich dann zu aktivieren, wenn die Fahrgeschwindigkeit des Fahrzeugs unterhalb einer vorbestimmten Geschwindigkeitsgrenze liegt.

10. Nutzfahrzeug gemäß einem der vorhergehenden Ansprüche, **gekennzeichnet durch** Überwachungskameras an den Seiten des Fahrzeugs (10), von denen jede Kamera einer Stütze (16) zugeordnet ist, zur Überwachung des Bodenflächenbereichs, auf welchem das Ende (20) dieser Stütze (16) in deren Betriebsposition ruht, und zur Aufnahme eines Echtzeitbildes der jeweiligen visuellen Markierung (22), sowie **durch** eine visuelle Anzeige zur Darstellung der Bilder aller Kameras zur gleichen Zeit.

## Revendications

1. Véhicule utilitaire, en particulier un véhicule de lutte contre l'incendie (10), comprenant un appareil aérien similaire à une échelle rotative (12) et/ou une plateforme de secours aérienne et des supports au sol latéraux (16) qui peuvent être déplacés entre des positions rétractées et des positions de fonctionnement déployées dans lesquelles les extrémités des supports (16) reposent sur le sol, **caractérisé par** un système d'assistance pour positionner les supports au sol latéraux (16), comprenant des moyens optiques pour projeter des marquages visuels (22) sur les zones de sol sur lesquelles les extrémités (20) des supports (16) reposent dans leur position de fonctionnement, chaque marquage visuel (22) représentant une position de fonctionnement attendue d'un support.

2. Véhicule utilitaire selon la revendication 1, **caractérisé en ce que** les moyens optiques sont des sources de lumière (24) prévues pour projeter les marquages visuels (22) sur le sol.

3. Véhicule utilitaire selon la revendication 2, **caractérisé en ce que** les sources de lumière (24) sont des sources de lumière laser.

4. Véhicule utilitaire selon la revendication 2 ou 3, **caractérisé en ce que** les moyens optiques comprennent des moyens pour diriger, focaliser et/ou pour masquer la lumière émise par les sources de lumière (24).

5. Véhicule utilitaire selon l'une des revendications précédentes, **caractérisé en ce que** les moyens optiques sont prévus pour projeter des marquages visuels (22) en forme de T, avec un faisceau longitudinal (26) s'étendant latéralement du véhicule (10) dans la direction de déploiement du support (16) respectif, et un faisceau transversal (28) s'étendant perpendiculairement aux deux côtés de l'extrémité extérieure du faisceau longitudinal (26).

6. Véhicule utilitaire selon l'une des revendications précédentes, **caractérisé en ce que** les moyens optiques sont prévus pour projeter des marquages visuels colorés (22).

7. Véhicule utilitaire selon l'une des revendications précédentes, **caractérisé par** des moyens de commande pour commander les moyens optiques, lesdits moyens de commande étant prévus pour mettre en oeuvre tous les moyens optiques présents de manière synchrone.

8. Véhicule utilitaire selon la revendication 7, **caractérisé en ce que** les moyens de commande sont prévus pour désactiver les moyens optiques après qu'un intervalle de temps prédéterminé s'est écoulé après leur activation.

9. Véhicule utilitaire selon la revendication 7 ou 8, **caractérisé en ce que** les moyens de commande sont prévus pour activer les moyens optiques uniquement si la vitesse de déplacement du véhicule est au-dessous d'une limite de vitesse prédéterminée.

10. Véhicule utilitaire selon l'une quelconque des revendications précédentes, **caractérisé par** des caméras de surveillance au niveau des côtés du véhicule (10), chaque caméra étant attribuée à un support (16) pour surveiller la zone de sol sur laquelle l'extrémité (20) de ce support (16) repose dans sa position de fonctionnement et pour prendre une image en réel temps du marquage visuel (22) respectif, et un afficheur visuel présentant les images de toutes les caméras simultanément.
